# EUROPEAN PATENT APPLICATION

(11) **EP 4 537 727 A1**
(43) Date of publication of application: **16.04.2025**
(21) Application number: 23818850.2
(22) Date of filing: 28.04.2023
(51) Int. Cl.: A47L 11/28, A47L 11/40

(54) **MOPPING ROBOT, WATER SPRAYING CONTROL METHOD AND APPARATUS THEREFOR, AND READABLE STORAGE MEDIUM**

(30) Priority: 09.06.2022 CN 202210653422
(71) Applicant: Qfeeltech (Beijing) Co., Ltd., Beijing 100191 (CN)
(72) Inventor: LIU, Zhanglin, Beijing 100191 (CN); ZHANG, Wei, Beijing 100191 (CN); BI, Junfeng, Beijing 100191 (CN)
(74) Representative: Novagraaf International SA
(86) International application number: PCT/CN2023/091516
(87) International publication number: WO 2023/236685

(57) **Abstract**

The present disclosure relates to a floor mopping robot and a water spray control method and apparatus and a readable storage medium, the water spray control method includes: an obtaining step, configured to obtain an already cleaned area of the floor mopping robot or an already moved distance of the floor mopping robot when the floor mopping robot executes a floor mopping task; and a control step, configured to control a water spray amount of a water spray system of the floor mopping robot based on the already cleaned area and a pre-set target cleaning area, or, control the water spray amount of the water spray system based on the already moved distance and a pre-set target moving distance. As such, slip of the floor mopping robot in a floor mopping process can be reduced or avoided.

## Description

### TECHNICAL FIELD

The present disclosure relates to the technical field of smart homes, and in particular, to a floor mopping robot and a water spray control method and apparatus for the floor mopping robot, and a readable storage medium.

### BACKGROUND TECHNOLOGY

In related technology, a floor mopping robot needs to first wet the floor, and then to mop the wetted floor (mopping the floor). If the floor is overly wetted (i.e., the degree of wetness of the floor is too high), a wheel assembly of the floor mopping robot may slip on the wet floor, causing the floor mopping robot to lose control of the movement, and to reduce the operating efficiency. Conversely, if the degree of wetness is insufficient, it may affect the floor mopping effect, thereby reducing the cleaning capability. Therefore, water spray control is one of the important functions of a floor mopping robot.

In existing technology, the water spray control method typically involves a water spray control system of the floor mopping robot spraying a fixed amount of water at a predetermined time interval (i.e., spraying water at pre-set time), for example, spraying 3ml of water every minute. However, this type of water spray control method has a severe deficiency. For example, when the floor mopping robot is in a predicament escaping mode or an obstacle avoidance mode, the floor mopping robot may move back and forth multiple times within a small zone. Spraying water according to pre-set time may cause the floor in the small zone to be overly wetted, which can cause the wheel assembly of the floor mopping robot to slip on the floor. The slip of the floor mopping robot can in turn make it easier for the floor mopping robot to continue moving within the small zone, thereby worsening the slip, and further causing the floor mopping robot to have difficulty in moving out of this zone, or even causing the floor mopping robot to lose control. In the meantime, it may cause the zone to be overly wet and slippery, which is not only disadvantageous for the localization of the floor mopping robot, the floor cleaning, but may also possibly increase the risk of slip for a user.

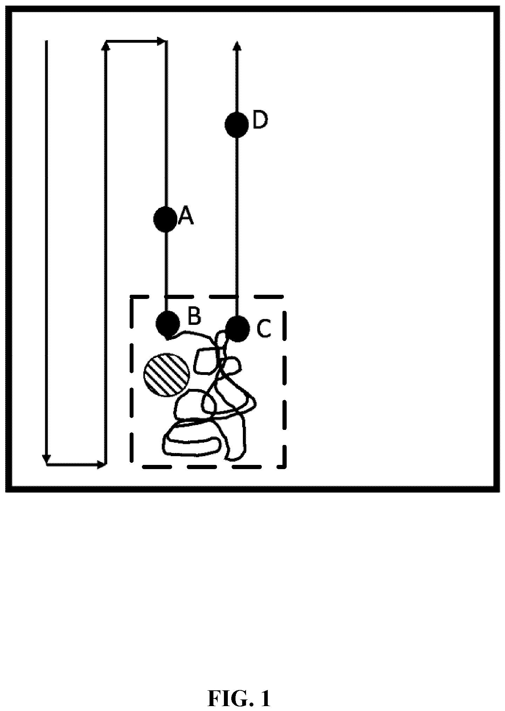

As shown in FIG. 1, after the floor mopping robot sprays water at point A, it may again spray water at point B after a pre-set time interval t0 has elapsed. Then, slip may occur during a movement (e.g., it may be possible that the wheel assembly may idle or may be stuck due to obstacles such as a lamp base, a doorsill, or it may be possible that the wheel assembly may idle at the same place due to water stain originally existing on the floor), then no matter which location within the dashed zone the floor mopping robot moves to due to slip, the floor mopping robot still performs a water spray at every pre-set time interval t0. If it is lucky, the floor mopping robot may escape from the slippery zone at point C and may move toward point D along a normal moving path. From the time when the floor mopping robot enters the slippery zone at point B to the time when it leaves the slippery zone, the time period in which the floor mopping robot stays in this zone is relatively long due to slip, and multiple times of water spray may occur, which may cause the floor in the dashed zone to be overly wetted, thereby causing more serious slip or even loss of control for the floor mopping robot.

As such, how to reduce or avoid slip for a floor mopping robot in a floor mopping process, is one of the problems that existing floor mopping robots need to address.

### CONTENT OF INVENTION

In view of these, the present disclosure provides a floor mopping robot and a water spray control method and apparatus for the floor mopping robot, and a readable storage medium, which can reduce or avoid slip for the floor mopping robot in a floor mopping process.

According to a first aspect of the present disclosure, a water spray control method for a floor mopping robot is provided, including: an obtaining step, configured to obtain an already cleaned area of the floor mopping robot or an already moved distance of the floor mopping robot when the floor mopping robot executes a floor mopping task; and a control step, configured to control a water spray amount of a water spray system of the floor mopping robot based on the already cleaned area and a pre-set target cleaning area, or, control the water spray amount of the water spray system based on the already moved distance and a pre-set target moving distance.

According to a second aspect of the present disclosure, a floor mopping robot is provided, including: an obtaining unit, configured to obtain an already cleaned area of the floor mopping robot or an already moved distance of the floor mopping robot when the floor mopping robot executes a floor mopping task; and a control unit, configured to control a water spray amount of a water spray system of the floor mopping robot based on the already cleaned area and a pre-set target cleaning area, or, control the water spray amount of the water spray system based on the already moved distance and a pre-set target moving distance.

In a possible implementation, the obtaining unit is configured to: record a location of a way point of the floor mopping robot in a first control period; obtain a current location of the floor mopping robot in a second control period, and calculate a first distance between the current location and the location of the way point, and use the first distance as an already moved distance of the floor mopping robot in the first control period and the second control period, where the second control period is a next control period that is closely adjacent to the first control period, and the way point recorded in the first control period is a starting point of the first distance. The floor mopping robot also includes: a determination unit, configured to determine whether the already moved distance has reached a target moving distance; a processing unit, configured to record a location of a new way point of the floor mopping robot in the second control period when it is determined that the already moved distance has not reached the target moving distance; obtain a current location of the floor mopping robot in a third control period, and calculate a second distance between the current location and the location of the new way point, where the way point recorded in the second control period is a starting point of the second distance; calculate a sum of the first distance and the second distance and use the sum as an already moved distance of the floor mopping robot in the first to the third control periods; return to continue sequentially executing the processing executed by the determination unit and the processing executed by the processing unit, until the already moved distance reaches the target moving distance, where the third control period is a next control period closely adjacent to the second control period.

In a possible implementation, the processing unit is configured to: calculate the sum of the first distance and the second distance and use the sum as the already moved distance of the floor mopping robot in the first to the third control periods only when a location change between the current location obtained in the third control period and the current location obtained in the second control period is greater than a predetermined threshold, and when the current location obtained in the third control period is in a current moving direction of the floor mopping robot.

In a possible implementation, the obtaining unit is configured to: obtain coordinates of the current location of the floor mopping robot in a map and coordinates of the location of the way point of the floor mopping robot in the map; calculate a difference between the coordinates of the current location and the coordinates of the location of the way point, and use the difference as the already moved distance.

In a possible implementation, the control unit is configured to: in a first stage, in a time period in which the already moved distance of the floor mopping robot reaches the first distance, control the water spray system to accumulatively spray a first pre-set amount of water; or in the first stage, at a time instance when the already moved distance of the floor mopping robot reaches the first distance, control the water spray system to spray the first pre-set amount of water.

In a possible implementation, the control unit is configured to: in a first stage, during a time period in which the already cleaned area of the floor mopping robot reaches a first area, control the water spray system to accumulatively spray a first pre-set amount of water; or in the first stage, at a time instance when the already cleaned area of the floor mopping robot reaches the first area, control the water spray system to spray the first pre-set amount of water.

In a possible implementation, a second stage is included after the first stage, and the control unit is configured to: in the second stage, control the water spray system to spray a second pre-set amount of water whenever the already cleaned area of the floor mopping robot reaches the target cleaning area; or in the second stage, control the water spray system to spray the second pre-set amount of water whenever the already moved distance of the floor mopping robot reaches the target moving distance.

According to a third aspect of the present disclosure, a water spray control apparatus for a floor mopping robot is provided, including: a processor; a storage device configured to store processor-executable instructions; where, the processor is configured to execute the above-described water spray control method when executing the instructions stored in the storage device.

According to a fourth aspect of the present disclosure, a computer-readable storage medium is provided, which stores computer program instructions, where, when the computer program instructions are executed by a processor of the floor mopping robot, the above-described water spray control method is executed.

According to a fifth aspect of the present disclosure, a computer program product is provided, including computer-readable codes, or a computer-readable storage medium carrying computer-readable codes, when the computer-readable codes are executed by a processor of a floor mopping robot, the processor of the floor mopping robot executes the above-described water spray control method.

According to the present disclosure, the floor mopping robot controls the water spray amount of the water spray system of the floor mopping robot based on the obtained already cleaned area of the floor mopping robot and the pre-set target cleaning area, or, the floor mopping robot controls the water spray amount of the water spray system based on the obtained already moved distance of the floor mopping robot and the pre-set target moving distance. As such, compared with the existing technology, in which a floor mopping robot sprays water according to pre-set time, the floor mopping robot of the present disclosure sprays water based on the already cleaned area of the floor mopping robot or the already moved distance of the floor mopping robot. As such, even if the floor mopping robot slips at point B shown in FIG. 1 due to conditions of the floor, such that the floor mopping robot moves for a relatively long time along the irregular path shown in FIG. 1 and cannot leave the small zone in the frame, however, because the already cleaned area/already moved distance of the floor mopping robot does not have an obvious change (e.g., an obvious increase), the floor mopping robot will not continue spraying water, and there will not be excessive water spray, and the floor will not be overly wet and slippery. Naturally, the degree of slip of the floor mopping robot will not be increased. Therefore, the slip of the floor mopping robot can be reduced or avoided in a floor mopping process.

Based on the following detailed descriptions of the illustrative embodiments with reference to the accompanying drawings, other features and aspects of the present disclosure will become clearer.

### DESCRIPTION OF ACCOMPANYING DRAWINGS

The accompanying drawings, which are included in the specification and form parts of the specification, together with the specification, show the illustrative embodiments, features and aspects of the present disclosure, and are used to explain the principle of the present disclosure.
FIG. 1 is a schematic illustration of slip caused by water spray using a water spray control method according to existing technology.
FIG. 2 is a flowchart illustrating a water spray control method for a floor mopping robot according to an illustrative embodiment.
FIG. 3 is a flowchart illustrating a water spray control method for the floor mopping robot according to an illustrative embodiment.
FIG. 4 is a flowchart illustrating a water spray control method for the floor mopping robot according to an illustrative embodiment.
FIG. 5 is a diagram of a floor mopping robot according to an illustrative embodiment.

### DETAILED IMPLEMENTATIONS

Next, various illustrative embodiments, features, and aspects of the present disclosure will be explained in detail with reference to the accompanying drawings. The same labels in the accompanying drawings represent components having the same or similar functions. Although various aspects are illustrated in the accompanying drawings, unless otherwise noted, the drawings are not necessarily to scale.

The specific term "illustrative" as used herein means "as an example, an embodiment, or illustration." Any embodiment modified by the term "illustrative" need not be interpreted as being advantageous or better than other embodiments.

In addition, to better explain the present disclosure, various specific details are provided in the following detailed implementations. A person having ordinary skills in the art can appreciate that without certain specific details, the present disclosure can still be implemented. In some other embodiments, methods, means, components and electric circuits that may be well-known to a person having ordinary skills in the art are not explained in detail, such that the main principle of the present disclosure can be conveniently explained.

As described above, if a floor mopping robot sprays water at pre-set time intervals, more severe slip or even loss of control may occur to the floor mopping robot, and the floor may be made too wet and slippery.

As such, considering that when the floor mopping robot slips, there is no obvious change in the already cleaned area or the already moved distance of the floor mopping robot, if water spray is performed based on the already cleaned area of the floor mopping robot or the already moved distance of the floor mopping robot, then even if the floor mopping robot slips, because before the floor mopping robot leaves the slippery zone, as time elapses, there is no obvious change in the already cleaned area of the floor mopping robot or the already moved distance of the floor mopping robot, therefor the floor mopping robot will not continue spraying water, and the water spray will not be excessive, and hence the floor will not be overly wet and slippery. Naturally, the degree of slip of the floor mopping robot will not be increased, thereby solving the above-described problems.

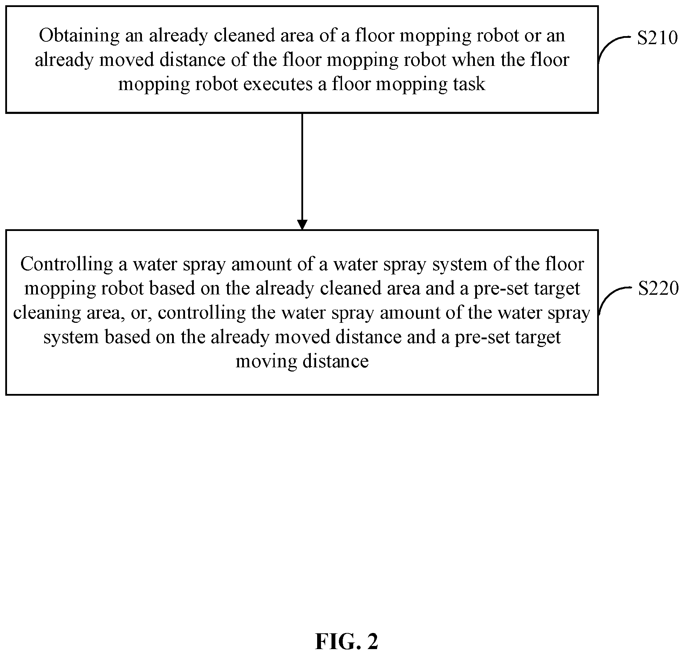

Based on the above conception, a water spray control method for the floor mopping robot as shown in FIG. 2 is provided. This water spray control method is executed by the floor mopping robot. The floor mopping robot may be a device that autonomously moves in a closed space of an actual work zone while keeping a mop tightly contacting a floor to be cleaned to realize mopping of the floor of the closed space. For example, the floor mopping robot may include, but not be limited to, a smart floor mopping and sweeping integrated robot, etc.

### First embodiment:

Referring to FIG. 2, the water spray control method of this illustrative embodiment may include the following steps:

Step S210, obtaining an already cleaned area of a floor mopping robot or an already moved distance of the floor mopping robot when the floor mopping robot executes a floor mopping task.

In this embodiment, in the process of the floor mopping robot executing a floor mopping task, the floor mopping robot may detect, in real time, the already cleaned area of the floor mopping robot or the already moved distance of the floor mopping robot. Of course, in the process of the floor mopping robot executing the floor mopping task, the floor mopping robot may also detect, at random time instances within a certain range, the already cleaned area of the floor mopping robot or the already moved distance of the floor mopping robot, for example, detect the already cleaned are or the already moved distance of the floor mopping robot at random time instances within a 100ms range. It should be noted that typically there is a ratio relationship between the already cleaned area and the already moved distance of the floor mopping robot. For example, the already moved distance of the floor mopping robot is L, a work width is W, the already cleaned area is S, then simply speaking, S= W×L, i.e., the already cleaned area is a product of the already moved distance and the work width. Therefore, the already cleaned area and the already moved distance may be mutually transformed into one another, or only one parameter may be used to represent the two parameters.

After obtaining the already cleaned area or the already moved distance in step S210, the next step S220 is executed.

Step S220, controlling the water spray amount of the water spray system of the floor mopping robot based on the already cleaned area and the pre-set target cleaning area, or, controlling the water spray amount of the water spray system based on the already moved distance and the pre-set target moving distance.

In this embodiment, the water spray system is configured to spray water. The water sprayed by the water spray system may be used to wet the floor on which the floor mopping robot is executing the floor mopping task. Of course, the water sprayed by the water spray system may also be used to wet a mop. The present disclosure does not limit the use of the water sprayed by the water spray system.

It should be understood that, if the already cleaned area is obtained in step S210, then in step S220, the water spray amount of the water spray system may be controlled based on the already cleaned area and the pre-set target cleaning area. In a possible implementation, the target cleaning area may be pre-set based on a cleaning area corresponding to a floor mopping task that can be completed by the floor mopping robot using the water sprayed by the water spray system. Illustratively, assuming that whenever the water spray system sprays 6ml of water, the floor mopping robot can complete a floor mopping task for an area of 6m², then the target cleaning area may be pre-set to be 6m².

Correspondingly, if the already moved distance is obtained in step S210, then in step S220, the water spray amount of the water spray system may be controlled based on the already moved distance and the pre-set target moving distance. In a possible implementation, the target moving distance may be pre-set based on a moving distance corresponding to a floor mopping task that can be completed by the floor mopping robot using the water sprayed by the water spray system. Illustratively, assuming that whenever the water spray system sprays 6ml of water, the floor mopping robot can complete a floor mopping task having a moving distance of 24m, then the target moving distance may be pre-set as 24m.

As such, compared to existing technology where the water is sprayed according to pre-set time, in the present disclosure the floor mopping robot sprays water based on the already cleaned area of the floor mopping robot or the already moved distance of the floor mopping robot. In this manner, even if the floor mopping robot slips at point B in FIG. 1 due to the condition of the floor, such that the floor mopping robot moves for a relatively long time along an irregular path and cannot leave the small zone in the frame, however, because the already cleaned area/already moved distance of the floor mopping robot does not have an obvious change (e.g., obvious increase), the floor mopping robot will not continue spraying water, and there will not be excessive water spray, and the floor will not be overly wet and slippery. Naturally, the degree of slip of the floor mopping robot will not be increased. Therefore, the slip of the floor mopping robot can be reduced or avoided in a floor mopping process.

In a possible implementation, controlling the water spray amount of the water spray system of the floor mopping robot based on the already cleaned area and the pre-set target cleaning area includes: controlling the water spray system to spray a pre-set amount of water whenever the already cleaned area reaches the target cleaning area.

In this embodiment, whenever the floor mopping robot finishes cleaning the target cleaning area, the water spray system sprays the pre-set amount of water. Illustratively, the pre-set amount of water is, for example, 6ml. Continuing with the above example, whenever the floor mopping robot cleans an area of 6m², the water spray system sprays 6ml of water.

As such, compared with the existing technology in which the water is sprayed according to pre-set time, in the present disclosure, the water spray system sprays the pre-set amount of water whenever the floor mopping robot cleans the target cleaning area. That is, in the present disclosure, water is sprayed according to the target cleaning area. As such, even if the floor mopping robot slips at point B in FIG. 1 due to the condition of the floor, such that the floor mopping robot moves for a relatively long time along an irregular path shown in FIG. 1 and cannot leave the small zone in the frame, however, because the already cleaned area of the floor mopping robot does not have an obvious change, the already cleaned area has not reached the target cleaning area, therefore, the floor mopping robot will not continue spraying water until it leaves the slippery area represented by the dashed frame, and when the already cleaned area calculated from point B reaches the target cleaning area (e.g., at point C). Then the floor mopping robot may spray water again. Thus, there will not be excessive water spray in the zone indicated by the dashed frame, and the floor will not be overly wet and slippery. Naturally the degree of slip of the floor mopping robot will not be increased. Therefore, the slip of the floor mopping robot in the floor mopping process may be reduced or avoided, such that the floor mopping robot can move from point C to point D along an originally planned path. In the meantime, unnecessary water spray can be saved, such that the water stored in the water tank can be used to wet a floor of a larger area.

In a possible implementation, controlling the water spray amount of the water spray system of the floor mopping robot based on the already moved distance and the pre-set target moving distance includes: controlling the water spray system to spray a pre-set amount of water whenever the already moved distance reaches the target moving distance.

In this embodiment, whenever the floor mopping robot has moved for the target moving distance, the water spray system sprays the pre-set amount of water. Illustratively, the pre-set amount of water may be, for example, 6ml. Continuing with the above example, whenever the floor mopping robot has moved for a distance of 24m, the water spray system sprays 6ml of water.

In a possible implementation, in the first stage (e.g., in an initial stage after the floor mopping robot is started up at a charging station), during a time period in which the already moved distance of the floor mopping robot reaches a first distance, the water spray system is controlled to accumulatively spray a first pre-set amount of water; or in the first stage, at a time instance when the already moved distance of the floor mopping robot reaches the first distance, the water spray system is controlled to spray the first pre-set amount of water.

In this embodiment, at the initial stage (corresponding to the first stage), during a time period in which the floor mopping robot moves for the first distance, the accumulated water spray amount reaches the first pre-set amount (multiple water sprays at equal distances, such that when the already moved distance reaches the first distance, the total water spray amount reaches the first pre-set amount), or, in the initial stage, at a time instance when the floor mopping robot moves for the first distance, the first pre-set amount of water may be sprayed at a single spray.

In a possible implementation, in the first stage, during a time period in which the already cleaned area of the floor mopping robot reaches a first area, the water spray system is controlled to accumulatively spray the first pre-set amount of water (multiple water sprays at equal areas, such that when the already cleaned area reaches the first area, the total water spray amount reaches the first pre-set amount); or in the first stage, at a time instance when the already cleaned area of the floor mopping robot reaches the first area, the water spray system is controlled to spray the first pre-set amount of water at a single spray.

In this embodiment, in the initial stage, during a time period in which the floor mopping robot has cleaned the first area, the accumulated water spray amount reaches the first pre-set amount (multiple water sprays at equal areas, such that when the already cleaned area reaches the first area, the total water spray amount reaches the first pre-set amount), or, in the initial stage, at a time instance when the floor mopping robot cleans the first area, the first pre-set amount of water may be sprayed at a single spray.

In a possible implementation, a second stage is included after the first stage. In the second stage, the water spray system is controlled to spray a second pre-set amount of water whenever the already cleaned area of the floor mopping robot reaches the target cleaning area; or in the second stage, the water spray system is controlled to spray the second pre-set amount of water whenever the already moved distance of the floor mopping robot reaches the target moving distance.

In this embodiment, in a normal operation stage (corresponding to the second stage), the second pre-set amount of water is sprayed whenever the target cleaning area is cleaned, or, in the normal operation stage, the second pre-set amount of water is sprayed whenever the target moving distance is reached. In a possible implementation, the second pre-set amount is smaller than the first pre-set amount.

As such, compared with the existing technology in which water is sprayed according to pre-set time, in the present disclosure, the water spray system sprays the pre-set amount of water whenever the floor mopping robot has moved for the target moving distance, that is, in the present disclosure, water is sprayed according to the target moving distance. Therefore, even if the floor mopping robot slips at point B shown in FIG. 1 due to the condition of the floor, such that the floor mopping robot moves for a relatively long time along an irregular path shown in FIG. 1 and cannot leave the small zone in the frame, however, because the already moved distance of the floor mopping robot does not have an obvious change, the already moved distance has not reached the target moving distance, thus the floor mopping robot will not continue spraying water, until the floor mopping robot escapes from the slippery zone represented by the dashed frame, and when the already moved distance calculated from point B has reached the target moving distance (for example, at point C, at this moment the floor mopping robot should have moved out of the slippery zone represented by the dashed frame for a certain distance). The floor mopping robot may then spray water again. Therefore, there will not be excessive water spray in the zone represented by the dashed frame, and the floor will not be overly wet and slippery. Naturally, the degree of slip of the floor mopping robot will not be increased, thereby reducing or avoiding the slip of the floor mopping robot in a floor mopping process, such that the floor mopping robot can move from point C toward point D along an originally planned path. In the meantime, unnecessary water spray can be saved, such that the water in the water tank can wet a floor of a larger area.

Through comparing the water spray control method of the present disclosure, i.e., a water spray strategy based on the already moved distance, and the water spray control method of the existing technology, i.e., a water spray strategy based on time, it can be known that after the water tank of the floor mopping robot is fully filled, the floor mopping robot can clean the floor for 40 minutes by adopting the water spray control method of the existing technology, but slip is severe; in contrast, the floor mopping robot can clean the floor for 76 minutes by adopting the water spray control method of the present disclosure, and can effectively reduce the slip of the wheel assembly of the floor mopping robot while maintaining a sufficient degree of wetness. In addition, the moving distance threshold (target moving distance) may be dynamically adjusted based on actual conditions. Therefore, it can be known that the water spray control method of the present disclosure can indeed achieve the technical effect of the present disclosure.

### Second embodiment:

As described in the first embodiment, an implementation of the present disclosure is, water is sprayed at every target moving distance. Therefore, the water spray interval is calculated based on the moving distance. There are typically two methods for calculating the distance, i.e., a method for calculating an absolute distance and a method for calculating a relative distance. For example, in a Cartesian coordinate system, the absolute distance can be calculated based on coordinates of two points in the space. As long as the coordinates of the two points are accurate, the calculated absolute distance is accurate. The relative distance is a distance derived using a point as a reference point, and is a distance relative to the reference point calculated based on motion parameters. The accuracy of the relative distance is not only related to the coordinates of the reference point, but is also related to sensors used for measuring distance and angle in the movement from the reference point to the next location. Typically, motion parameters such as distance, velocity, acceleration, angle, angular velocity, angular acceleration obtained using dead reckoning sensors such as an odometer, an inertial measurement unit (IMU) may have accumulative errors due to reasons relating to the sensors, which can cause the accuracy of the relative distance calculated based on the motion parameters output by the sensors to be smaller than the accuracy of the absolute distance calculated based on the coordinates of the two locations.

On the basis of the technical conception of water spray at every interval target moving distance as described in the first embodiment, when the method for obtaining the moving distance is expanded in detail, the second embodiment can be obtained.

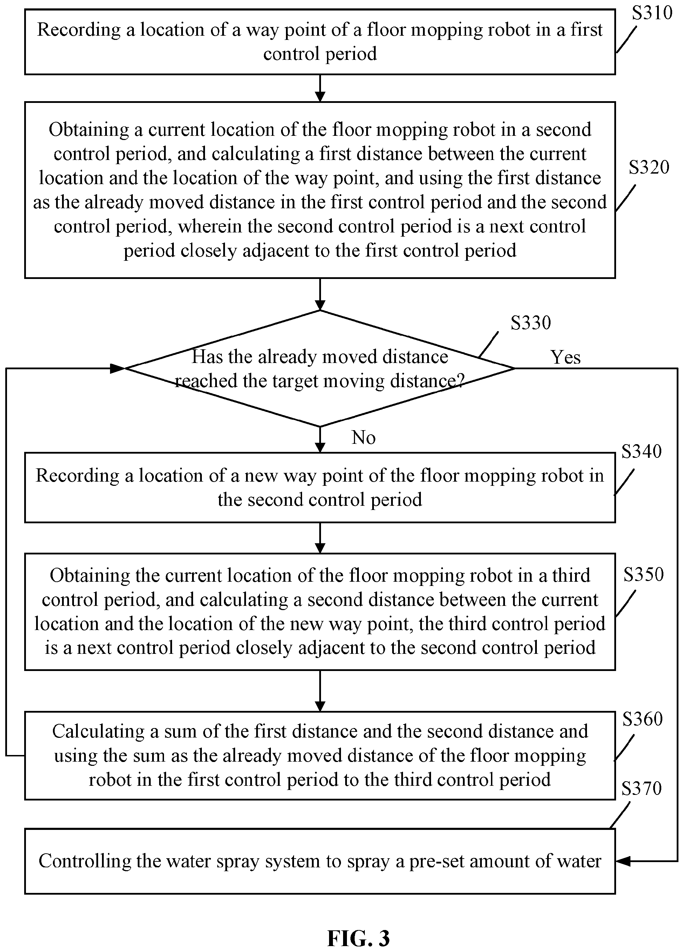

FIG. 3 is a flowchart illustrating a water spray control method for the floor mopping robot according to an illustrative embodiment. As shown in FIG. 3, the water spray control method includes the following steps.

Step S310, recording a location of a way point of the floor mopping robot in a first control period.

In this embodiment, starting from a certain control period n (corresponding to the first control period), the floor mopping robot executes a floor mopping task. The floor mopping robot moves along a cornrow cleaning path and records a location of a certain way point. Here, the control period is a time period. An already moved distance may be accumulated during the corresponding control period. The purpose of recording the way point in the control period n is to use the way point as a starting point that is used in the calculation of the absolute distance (first distance) in the next control period (n+1).

Here the cornrow cleaning path means that the floor mopping robot moves in a first long edge direction along a straight line; when an obstacle is encountered, the floor mopping robot rotates in a first rotation direction such as a clockwise direction such that a side of the floor mopping robot is approximately parallel with an edge of the obstacle, and then the floor mopping robot moves along the edge of the obstacle for a short pre-set distance (e.g., about a work width, such as 25cm). Then the floor mopping robot spins at the same place to a second long edge direction that is anti-parallel with the first long edge direction, and moves forward along the second long edge direction; when the obstacle is again encountered, the floor mopping robot rotates in a second rotation direction that is opposite to the first rotation direction, such as a counter clockwise direction, to be approximately parallel with an edge of the obstacle, and then moves along the edge of the obstacle for the pre-set distance. Then the floor mopping robot spins at the same place to the first long edge direction, and continues moving forward along the current first long edge direction. These steps are repeated cyclically to realize the cornrow cleaning path.

Step S320, obtaining a current location of the floor mopping robot during the second control period, and calculating a first distance between the current location and a location of the way point, and using the first distance as the already moved distance of the floor mopping robot in the first control period and the second control period, where the second control period is a next control period that is closely adjacent to the first control period; for example control period (n+1). As described in step S310, the way point recorded in the first control period is a starting point of the first distance.

Step S330, determining whether the already moved distance reaches the target moving distance. When it is determined that the target moving distance has not been reached, the result of the determination of step S330 is "No," and step S340 is executed. When it is determined that the target moving distance has been reached, the result of the determination in step S330 is "Yes," step S370 is executed.

In this embodiment, in the control period (n+1) (corresponding to the second control period), the current location of the floor mopping robot is obtained, and an absolute distance (corresponding to the first distance) between the current location and the location of the way point recorded last time (the location of the way point recorded in the control period n) may be calculated. When the absolute distance reaches the target moving distance, the water spray system is controlled to spray the pre-set amount of water; otherwise, the following steps S340, S350 and S360 are sequentially executed.

Step S340, recording a location of a new way point of the floor mopping robot in the second control period. The purpose of recording the way point in the control period (n+1) is to use the way point as a starting point to be used in the calculation of the absolute distance (second distance) in the next control period (n+2).

Step S350, obtaining a current location of the floor mopping robot in a third control period, and calculating a second distance between the current location and the location of the new way point. The third control period is a next control period that is closely adjacent to the second control period; for example control period (n+2). As described in step S340, the way point recorded in the second control period is a starting point of the second distance.

Step S360, calculating a sum of the first distance and the second distance and using the sum as an already moved distance of the floor mopping robot in the first to the third control periods. Then, the floor mopping robot returns to continue sequentially executing steps S330, S340, S350 and S360, until the already moved distance reaches the target moving distance.

Step S370, controlling the water spray system to spray a pre-set amount of water.

In this embodiment, in the control period (n+1), the location of a new way point is recorded. In the control period (n+2) (corresponding to the third control period), the current location of the floor mopping robot is obtained, and the absolute distance (corresponding to the second distance) between the current location and the location of the way point recorded last time (the location of the way point recorded in control period (n+1)) is calculated, and the two absolute distances are added up, and a sum of the two absolute distances is used as the already moved distance of the floor mopping robot in the control period n, the control period (n+1) and the control period (n+2). If the sum of the absolute distances reaches the target moving distance, the water spray system is controlled to spray the pre-set amount of water; otherwise, the following steps S340, S350 and S360 are sequentially executed.

Therefore, in this embodiment, the absolute distances obtained in each control period are accumulated, and water spray (the water spray system is controlled to spray the pre-set amount of water) is executed only when the accumulated total amount of the absolute distances reaches the target moving distance. In addition, it should be noted that after the completion of this water spray operation, the way point needs to be changed to the current water spray location. The floor mopping robot performs a water spray whenever the target moving distance is reached. This moving distance is an accumulated value of relative distances the floor mopping robot moved for in each control period. This accumulated distance is an absolute distance. Therefore, in the present disclosure, the moving distance is calculated based on a combination of relative distances and absolute distances.

In the present disclosure, the water spray interval is calculated based on the moving distance. There are typically two methods for calculating the distances, i.e., the absolute distance and the relative distance. An absolute distance may be calculated based on coordinates of two points in a space that has a coordinate system (e.g., the Cartesian coordinate system). A relative distance is a distance using a certain point as a reference point, and is calculated relative to the reference point based on motion parameters. The present disclosure adopts a method that combines the absolute distance and the relative distance. From a certain control period n, the robot performs cleaning along a cornrow path, and records a certain way point. In control period (n+1), a current location of the robot is obtained, and an absolute distance between the current location and the last recorded way point is calculated. The operations in control period (n+2), control period (n+3) are similar. The absolute distances obtained in each control period are accumulated, until the relative distance relative to the last recorded way point is greater than a certain threshold, then water spray operation may be executed. After the completion of this water spray operation, the way point needs to be changed to the current water spray location.

Therefore, compared with the existing technology in which water is sprayed according to pre-set time, in the present disclosure, whenever the moving distance of the floor mopping robot (an accumulated distance of absolute distances calculated based on the coordinates of a starting location in the map, i.e., the coordinates of the way point, and the coordinates of the current location) reaches the target moving distance, the water spray system is controlled to spray the pre-set amount of water, that is, in the present disclosure, the water spray is performed based on the target moving distance. As such, even if the floor mopping robot slips at point B in FIG. 1 due to conditions of the floor, such that the floor mopping robot moves for a relatively long time along an irregular path as shown in FIG. 1 and cannot leave the small zone in the frame, however, because the already moved distance of the floor mopping robot does not have an obvious change, the already moved distance has not reached the target moving distance, therefore, the floor mopping robot will not continue spraying water, until the floor mopping robot escapes from the slippery zone represented by the dashed frame, and the already moved distance calculated from point B has reached the target moving distance (e.g., at point C, at this moment the floor mopping robot has moved away from the slippery zone represented by the dashed frame for a certain distance). Then the floor mopping robot may spray water. Therefore, there will not be excessive water spray in the zone represented by the dashed frame, and the floor will not become overly wet and slippery. Naturally, the degree of slip of the floor mopping robot will not be increased. Therefore, the slip of the floor mopping robot during a floor mopping process can be reduced or avoided, such that the floor mopping robot can move from point C toward point D along an originally planned path. In the meantime, unnecessary water spray can be saved, such that the water stored in the water tank can wet a floor of a larger area.

In one implementation, the coordinates of the current location of the floor mopping robot in the map and the coordinates of the location of the way point of the floor mopping robot in the map may be obtained; an absolute distance may be obtained through calculating a difference between the coordinates of the current location and the location of the way point, and this absolute distance is used as the already moved distance.

In this embodiment, considering that the moving distance calculated based on the dead reckoning sensors is the actual moving distance calculated by the odometer and is not a straight line displacement between coordinates of two locations, under the slip condition, because the actual moving distance is relatively long, excessive water spray may still occur, which can cause more severe slip. Therefore, the already moved distance in the present disclosure can be the absolute distance calculated based on coordinates of starting and ending locations in the map (the coordinates of the way point and the coordinates of the current location). This moving distance is an absolute distance based on the coordinates of locations, and is not a relative distance or displacement that is calculated starting from a way point and based on dead reckoning sensors (including odometer, gyroscope and accelerometer). Therefore, excessive water spray under a slip condition may be avoided, which can avoid more severe slip.

Suitable adjustments on the basis of the second embodiment can lead to a third embodiment:

### Third embodiment:

Considering that the actual sensors unavoidably have system errors, therefore, even with pose estimate of the floor mopping robot through fusing multiple sensors, such as through fusing radar, IMU and wheel encoder (or referred to as odometer), the pose obtained still oscillates within a certain range. This oscillation of the pose can cause an adverse effect on the calculation of the accumulated distance.

In view of this, in order to reduce the effect of the pose on the calculation of the accumulated distance, the water spray control method of the third embodiment is provided. In the third embodiment, locations obtained through measurement or calculation are sifted, i.e., locations are filtered. Only when a location change between locations in a subsequent control period and in a previous control period is greater than a predetermined threshold, and a location in the subsequent control period is in the current moving direction of the floor mopping robot, this location is accumulated, thereby ensuring the accuracy of the calculation of the accumulated distance based on the absolute distances that are calculated based on the coordinates of the location of the way point and the coordinates of the current location to a maximum degree.

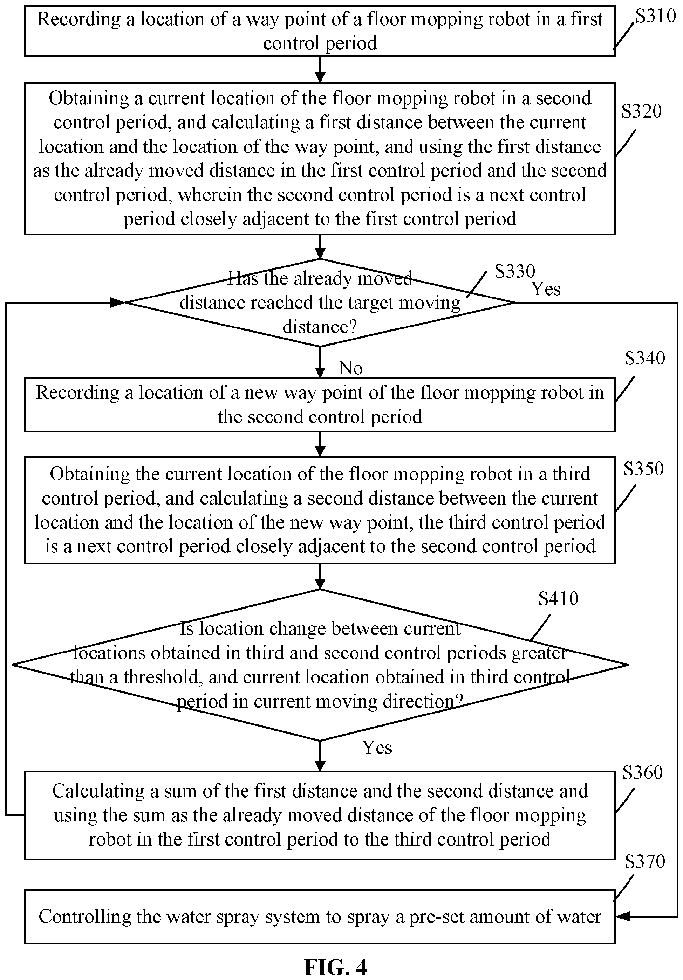

FIG. 4 is a flowchart illustrating a water spray control method for the floor mopping robot according to an illustrative embodiment. As shown in FIG. 4, the water spray control method includes the following steps.

Step S310, recording a location of a way pint of the floor mopping robot in a first control period.

Step S320, obtaining a current location of the floor mopping robot in a second control period, and calculating a first distance between the current location and the location of the way point, and using the first distance as an already moved distance of the floor mopping robot in the first control period and the second control period, where the second control period is a next control period that is closely adjacent to the first control period, and the way point recorded in the first control period is a starting point of the first distance.

Step S330, determining whether the already moved distance reaches the target moving distance. When it is determined that the target moving distance has not been reached, the result of determination in step S330 is "No," step S340 is executed.

Step S340, recording a location of a new way point of the floor mopping robot in the second control period.

Step S350, obtaining a current location of the floor mopping robot in the third control period, and calculating a second distance between the current location and the location of the new way point. Here the third control period is a next control period that is closely adjacent to the second control period, and the way point recorded in the second control period is a starting point of the second distance.

Step S410, determining whether a location change between the current location obtained in the third control period and the current location obtained in the second control period is greater than a predetermined threshold, and whether the current location obtained in the third control period is in the current moving direction of the floor mopping robot. When the result of determination is "Yes," step S360 is executed. Here, the predetermined threshold is, for example, an accuracy of a grid map.

Step S360, calculating a sum of the first distance and the second distance and using the sum as an already moved distance of the floor mopping robot in the first to the third control periods. Then, the floor mopping robot returns to continue sequentially executing steps S330, S340, S350, S410 and S360, until the already moved distance reaches the target moving distance.

Step S370, controlling the water spray system to spray the pre-set amount of water.

Steps S310 - S370 in the third embodiment are similar to steps S310 - S370 in the second embodiment, the descriptions of which are not repeated.

In this embodiment, only when a location change between the current location obtained in the third control period and the current location obtained in the second control period is greater than the predetermined threshold, and the current location obtained in the third control period is in the current moving direction of the floor mopping robot, the first distance and the second distance are added up, and the sum of the first distance and the second distance is used as the already moved distance of the floor mopping robot in the first to the third control periods. Otherwise, the sum of the first distance and the second distance is not used as the already moved distance of the floor mopping robot in the first to the third control periods.

As such, by adding step S410 on the basis of the second embodiment, the obtained locations can be sifted to exclude unsuitable locations, such that the locations used for calculating the accumulated distance (of absolute distances calculated based on coordinates of the way point and the coordinates of the current location) are more accurate, thereby increasing the accuracy of the calculation of the accumulated distance.

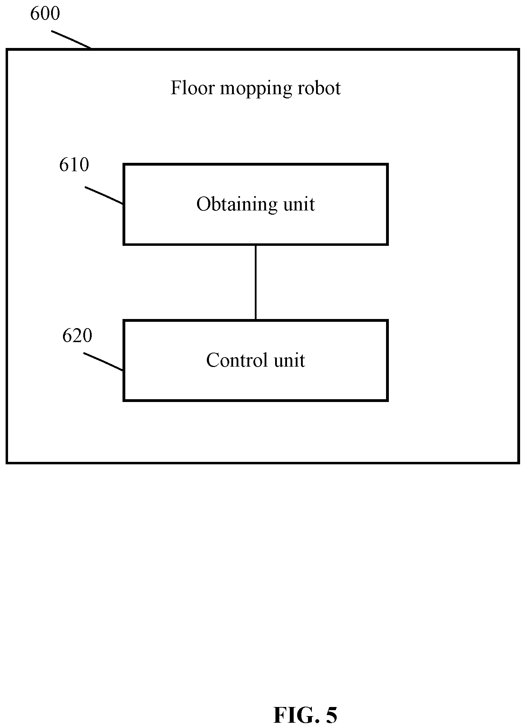

FIG. 5 is a diagram of a floor mopping robot according to an illustrative embodiment. As shown in FIG. 5, a floor mopping robot 600 may include an obtaining unit 610 and a control unit 620.

The obtaining unit 610 may be configured to obtain an already cleaned area of the floor mopping robot or an already moved distance of the floor mopping robot when the floor mopping robot executes a floor mopping task. The control unit 620 is connected with the obtaining unit 610. The control unit 620 is configured to control the water spray amount of the water spray system of the floor mopping robot based on the already cleaned area and the pre-set target cleaning area, or, control the water spray amount of the water spray system based on the already moved distance and the pre-set target moving distance.

In a possible implementation, the control unit 620 may be configured to: control the water spray system to spray the pre-set amount of water whenever the already cleaned area reaches the target cleaning area.

In a possible implementation, the control unit 620 is configured to: control the water spray system to spray the pre-set amount of water whenever the already moved distance reaches the target moving distance.

In a possible implementation, the obtaining unit 610 is configured to: record a location of a way point of the floor mopping robot in a first control period; obtain a current location of the floor mopping robot in a second control period, and calculate a first distance between the current location and the location of the way point, and use the first distance as the already moved distance of the floor mopping robot in the first control period and the second control period, where the second control period is a next control period that is closely adjacent to the first control period, and the way point recorded in the first control period is a starting point of the first distance. The floor mopping robot 600 may also include a determination unit (not shown) and a processing unit (not shown), where, the determination unit is configured to determine whether the already moved distance has reached the target moving distance; the processing unit is configured to record a location of a new way point of the floor mopping robot in the second control period when it is determined that the target moving distance has been reached; obtain the current location of the floor mopping robot in the third control period, and calculate a second distance between the current location and the location of the new way point, where the way point recorded in the second control period is a starting point of the second distance; calculate a sum of the first distance and the second distance and use the sum as the already moved distance of the floor mopping robot in the first to the third control periods; return to continue sequentially executing processing executed by the determination unit and processing executed by the processing unit, until the already moved distance reaches the target moving distance, where the third control period is a next control period that is closely adjacent to the second control period.

In a possible implementation, the processing unit is configured to: calculate the sum of the first distance and the second distance and use the sum as the already moved distance of the floor mopping robot in the first to the third control periods only when a location change between the current location obtained in the third control period and the current location obtained in the second control period is greater than a predetermined threshold, and the current location obtained in the third control period is in the current moving direction of the floor mopping robot.

In a possible implementation, the obtaining unit 610 is configured to: obtain coordinates of the current location of the floor mopping robot in the map and coordinates of the location of the way point of the floor mopping robot in the map; calculate a difference between the coordinates of the current location and the coordinates of the location of the way point, and use the difference as the already moved distance.

In a possible implementation, the control unit 620 is configured to: in the first stage, during a time period in which the already moved distance of the floor mopping robot reaches the first distance, control the water spray system to accumulatively spray the first pre-set amount of water; or, in the first stage, at a time instance when the already moved distance of the floor mopping robot reaches the first distance, control the water spray system to spray the first pre-set amount of water.

In a possible implementation, the control unit 620 is configured to: in the first stage, during a time period in which the already cleaned area of the floor mopping robot reaches the first area, control the water spray system to accumulatively spray the first pre-set amount of water; or, in the first stage, at a time instance when the already cleaned area of the floor mopping robot reaches the first area, control the water spray system to spray the first pre-set amount of water.

In a possible implementation, the second stage is included after the first stage, the control unit 620 is configured to: in the second stage, control the water spray system to spray a second pre-set amount of water whenever the already cleaned area of the floor mopping robot reaches the target cleaning area; or, in the second stage, control the water spray system to spray the second pre-set amount of water whenever the already moved distance of the floor mopping robot reaches the target moving distance.

In the apparatus of the above embodiments, the detailed implementations for operations executed by each unit have been described in detail in the embodiments of the related methods, which are not repeated.

In some embodiments, functions or modules included in the apparatus provided by embodiments of the present disclosure may be used to execute the methods described in the above embodiments. The detailed implementations can refer to the above descriptions of the above embodiments. For simplicity of description, these are not repeated.

Embodiments of the present disclosure also provides a computer-readable storage medium, which stores computer program instructions. When the computer program instructions are executed by a processor of the floor mopping robot, the above-described water spray control methods can be implemented. The computer-readable storage medium may be transitory or non-transitory computer-readable storage medium.

Embodiments of the present disclosure also provide a water spray control apparatus, including: a processor; a storage device configured to store processor-executable instructions; here, the processor is configured to execute the above-described water spray control methods when executing the instructions stored in the storage device.

Embodiments of the present disclosure also provide a computer program product, including computer-readable codes, or a non-transitory computer-readable storage medium that carries the computer-readable codes. When the computer-readable codes are executed by a processor of the floor mopping robot, the processor of the floor mopping robot executes the above-described water spray control methods.

Various embodiments of the present disclosure have been described above. Such descriptions are illustrative, and are not exhaustive, and the present disclosure is not limited to the described embodiments. Without deviating from the scope and spirit of the described various embodiments, a person having ordinary skills in the art can appreciate that many modifications and changes may be obvious. The selections of the terms used herein are for the purpose of explaining the principles of various embodiments, the actual implementations or the improvements to the technologies in the market, or to enable other persons having ordinary skills in the art to understand various disclosed embodiments.

## Claims

1. A water spray control method for a floor mopping robot, **characterized in that**, comprising:
an obtaining step, configured to obtain an already cleaned area of the floor mopping robot or an already moved distance of the floor mopping robot when the floor mopping robot executes a floor mopping task; and
a control step, configured to control a water spray amount of a water spray system of the floor mopping robot based on the already cleaned area and a pre-set target cleaning area, or, to control the water spray amount of the water spray system based on the already moved distance and a target moving distance.

2. The water spray control method of claim 1, **characterized in that**, wherein the control step comprises:
controlling the water spray system to spray a pre-set amount of water whenever the already cleaned area reaches the target cleaning area.

3. The water spray control method of claim 1, **characterized in that**, wherein the control step comprises:
controlling the water spray system to spray a pre-set amount of water whenever the already moved distance reaches the target moving distance.

4. The water spray control method of claim 3, **characterized in that**, wherein the obtaining step comprises:
recording a location of a way point of the floor mopping robot in a first control period;
obtaining a current location of the floor mopping robot in a second control period, and calculating a first distance between the current location and the location of the way point, and using the first distance as the already moved distance of the floor mopping robot in the first control period and the second control period, wherein the second control period is a next control period that is closely adjacent to the first control period, and the way point recorded in the first control period is a starting point of the first distance,
wherein the water spray control method also comprises:
a determination step, configured to determine whether the already moved distance reaches the target moving distance;
a processing step, configured to
record a location of a new way point of the floor mopping robot in the second control period when it is determined that the target moving distance has not been reached;
obtain a current location of the floor mopping robot in the third control period, and calculate a second distance between the current location and the location of the new way point, wherein the way point recorded in the second control period is a starting point of the second distance;
calculate a sum of the first distance and the second distance and use the sum as the already moved distance of the floor mopping robot in the first to the third control periods;
return to continue sequentially executing the determination step and the processing step, until the already moved distance reaches the target moving distance,
wherein the third control period is a next control period that is closely adjacent to the second control period.

5. The water spray control method of claim 4, **characterized in that**, wherein calculating the sum of the first distance and the second distance and using the sum as the already moved distance of the floor mopping robot in the first to the third control periods, comprises:
calculating the sum of the first distance and the second distance and using the sum as the already moved distance of the floor mopping robot in the first to the third control periods only when a location change between the current location obtained in the third control period and the current location obtained in the second control period is greater than a predetermined threshold, and when the current location obtained in the third control period is in a current moving direction of the floor mopping robot.

6. The water spray control method of claim 4, **characterized in that**, wherein the obtaining step comprises:
obtaining coordinates of the current location of the floor mopping robot in a map and coordinates of the location of the way point of the floor mopping robot in the map;
calculating a difference between the coordinates of the current location and the coordinates of the location of the way point, and using the difference as the already moved distance.

7. The water spray control method of claim 1, **characterized in that**, wherein the control step comprises:
in a first stage, during a time period in which the already moved distance of the floor mopping robot reaches a first distance, controlling the water spray system to accumulatively spray a first pre-set amount of water; or
in the first stage, at a time instance when the already moved distance of the floor mopping robot reaches a first distance, controlling the water spray system to spray the first pre-set amount of water.

8. The water spray control method of claim 1, **characterized in that**, wherein the control step comprises:
in a first stage, during a time period in which the already cleaned area of the floor mopping robot reaches a first area, controlling the water spray system to accumulatively spray a first pre-set amount of water; or
in the first stage, at a time instance when the already cleaned area of the floor mopping robot reaches the first area, controlling the water spray system to spray the first pre-set amount of water.

9. The water spray control method of claim 7 or 8, **characterized in that**,
wherein the second stage is included after the first stage,
wherein the control step also comprises:
in the second stage, controlling the water spray system to spray a second pre-set amount of water whenever the already cleaned area of the floor mopping robot reaches the target cleaning area; or
in the second stage, controlling the water spray system to spray a second pre-set amount of water whenever the already moved distance of the floor mopping robot reaches the target moving distance.

10. A floor mopping robot, **characterized in that**, comprising:
an obtaining unit, configured to obtain an already cleaned area of the floor mopping robot or an already moved distance of the floor mopping robot when the floor mopping robot executes a floor cleaning task; and
a control unit, configured to control a water spray amount of a water spray system of the floor mopping robot based on the already cleaned area and a pre-set target cleaning area, wherein the water spray system is controlled to spray a pre-set amount of water whenever the already cleaned area reaches the target cleaning area; or, control the water spray amount of the water spray system based on the already moved distance and a pre-set target moving distance, wherein the water spray system is controlled to spray the pre-set amount of water whenever the already moved distance reaches the target moving distance.

11. The floor mopping robot of claim 10, **characterized in that**,
wherein the obtaining unit is configured to:
record a location of a way point of the floor mopping robot in a first control period;
obtain a current location of the floor mopping robot in a second control period, and calculate a first distance between the current location and the location of the way point, and use the first distance as the already moved distance of the floor mopping robot in the first control period and the second control period, wherein the second control period is a next control period that is closely adjacent to the first control period, and the way point recorded in the first control period is a starting point of the first distance,
wherein the floor mopping robot also comprises:
a determination unit, configured to determine whether the already moved distance has reached the target moving distance;
a processing unit, configured to
record a location of a new way point of the floor mopping robot in the second control period when it is determined that the target moving distance has not been reached;
obtain a current location of the floor mopping robot in a third control period, and calculate a second distance between the current location and the location of the new way point, wherein the way point recorded in the second control period is a starting point of the second distance;
calculate a sum of the first distance and the second distance and use the sum as the already moved distance of the floor mopping robot in the first to the third control periods;
return to continue sequentially executing processing executed by the determination unit and processing executed by the processing unit, until the already moved distance reaches the target moving distance,
wherein the third control period is a next control period that is closely adjacent to the second control period.

12. A water spray control apparatus for a floor mopping robot, comprising:
a processor;
a storage device configured to store process-executable instructions,
wherein, the processor is configured to implement the water spray control method according to any of claims 1-9 when executing the instructions stored in the storage device.

13. A computer-readable storage medium, which stores computer program instructions, **characterized in that**, wherein when the computer program instructions are executed by a processor of a floor mopping robot, the water spray control method according to any of claims 1-9 is executed.
